# EUROPÄISCHE PATENTSCHRIFT

(11) **EP 2 514 328 B1**
(45) Veröffentlichungstag und Bekanntmachung des Hinweises auf die Patenterteilung: **08.06.2016**
(21) Anmeldenummer: 12164457.9
(22) Anmeldetag: 17.04.2012
(51) Int. Cl.: A23P 30/20, A21C 11/16, B29C 47/08

(54) **Vorrichtung zum Extrudieren von Lebensmittelmassen**
Device for extruding food masses
Dispositif destiné à extruder des masses d'aliments

(30) Priorität: 20.04.2011 DE 202011005472 U
(43) Veröffentlichungstag der Anmeldung: 24.10.2012
(73) Patentinhaber: VEMAG Maschinenbau GmbH, 27283 Verden/Aller (DE)
(72) Erfinder: Kuhling-Marks, Gisbert, 27283 Verden (DE)
(74) Vertreter: Eisenführ Speiser

(56) Entgegenhaltungen:
- WO-A1-96/37117
- DE-T2-602005 003 037
- US-A- 5 820 911
- US-A1- 2005 103 208
- US-A1- 2008 031 988

## Beschreibung

Die Erfindung betrifft eine Vorrichtung zum Extrudieren von fließfähigen Lebensmittel-Massen, mit wenigstens einem Füllstromteiler, welcher einen Einlass zum Einleiten der fließfähigen Masse und mehrere Auslässe zum Abgeben mehrerer Massenströme der fließfähigen Masse aufweist und einer Düsenanordnung mit mehreren Düsen, welche jeweils einen mit einem Auslass des Füllstromteilers verbindbaren Einlass und einen Auslass zum Extrudieren der fließfähigen Masse aufweist. Ferner betrifft die Erfindung eine Düsenanordnung mit mehreren Koextrusionsdüsen.

Vorrichtungen der eingangs genannten Art werden zum Verarbeiten von fließfähiger Lebensmittel-Masse eingesetzt. Solche Lebensmittel-Massen umfassen beispielsweise pastöse Massen, wie Wurstbrät, Fischmasse, Kartoffelmasse, Teig und ähnliches, aber auch fließfähige Massen, wie beispielsweise Pasten und Soßen, Salate, wie beispielsweise Shrimp-Salat, Balkangemüse, Spinat, Obstsalate und ähnliches. Beispielsweise werden solche Vorrichtungen bei der Herstellung von Cevapcici, Fleischbällchen oder Fleischkroketten genutzt. Sollen gefüllte Kroketten, Klöße, Taschen und ähnliches hergestellt werden, kommen Koextrusionsdüsen zum Einsatz. Mittels solcher Düsen werden zwei im Wesentlichen fließfähige Lebensmittel-Massen so im Wesentlichen koaxial extrudiert, dass beispielsweise eine mit Käse gefüllte Fleischkrokette herstellbar ist. Hier sind vielfältige Einsatzmöglichkeiten denkbar.

Füllstromteiler werden bei Vorrichtungen der eingangs genannten Art dazu genutzt, einen einzelnen Massen-Strom fließfähiger Lebensmittel-Masse kontinuierlich in eine Mehrzahl im Wesentlichen gleicher Ströme aufzuteilen. Die einzelnen Massen-Ströme werden dann beispielsweise über Rohre oder Schläuche den einzelnen Extrusions- oder Koextrusionsdüsen zugeführt. Ein solcher Füllstromteiler ist beispielsweise aus EP 0 828 437 bekannt. Ein weiterer demgegenüber verbesserter Füllstromteiler ist beispielsweise aus DE 20 2009 013 467 bekannt. Eine Vorrichtung, bei der ein Füllstromteiler über Schläuche mit mehreren, genauer vier, Extrusionsdüsen verbunden ist, ist in DE 60 2005 003 037 T2 offenbart. Der Füllstromteiler ist dabei in der Regel mit einer Füllmaschine oder einer Vakuumpumpe verbunden, welche die fließfähige Lebensmittel-Masse in den Füllstromteiler fördern. Die Extrusionsdüse ist in der Regel so angeordnet, dass die extrudierte und portionierte Lebensmittel-Masse beispielsweise auf einem Förderband, in Schalen oder ähnlichem aufgefangen wird.

Darüber hinaus legt US 5820911 einen mehrstufigen Füllstromteiler offen, dem über eine druckbehaftete Aufbewahrungskammer Lebensmittel-Masse zugeführt wird und der diese über eine Mehrzahl an Zuführleitungen mehreren Pumpeneinrichtungen zuführt. Letzere weisen jeweils ein geteiltes Pumpengehäuse auf, wobei in der jeweils hinteren Gehäusehälfte Extrusionsdüsen ausgebildet sind, durch welche die Lebensmittel-Masse extrudiert wird. Aufgrund der direkten Kopplung der Extrusionsdüsen mit den Pumpeinrichtungen wird ein im Wesentlichen gleiches Druckniveau in jeder der Extrusionsdüsen erreicht.

Solche Vorrichtungen, bzw. Anordnungen von Vorrichtungen mit Füllstromteilern und Düsen bzw. Koextrusionsdüsen sind im Allgemeinen sehr aufwendig und aus vielen Einzelteilen montiert. Bei der Montage einer solchen Vorrichtung müssen insbesondere eine Vielzahl von Rohren, Krümmern, Rohrbögen, Düsen und ähnlichem zusammengeschraubt werden. Dies ist nicht nur bei der Montage sehr zeitaufwendig und komplex, sondern ebenso bei der Demontage. Insbesondere die Reinigung einer solchen Vorrichtung ist aufwendig und bereitet zuweilen Schwierigkeiten. Die bisherigen Entwicklungsanstrengungen wurden insbesondere auf eine Reduktion der Vielfalt der Verschraubungen gerichtet, sodass sich die Zahl der unterschiedlichen Werkzeuge, welche zur Montage und Demontage benötigt werden, reduziert. Dennoch bestehen die beschriebenen Probleme weiterhin fort.

Aufgabe der vorliegenden Erfindung ist es, eine Vorrichtung der eingangs genannten Art anzugeben, welche bezüglich der genannten Probleme verbessert ist. Insbesondere ist es Aufgabe der vorliegenden Erfindung eine solche Vorrichtung anzugeben, bei der die Montage vereinfacht und/oder mit geringerem Zeitaufwand durchzuführen ist. Alternativ oder zusätzlich ist es insbesondere Aufgabe der vorliegenden Erfindung eine solche Vorrichtung anzugeben, bei der die Reinigung vereinfacht ist und/oder weniger zeitaufwendig ist.

Diese Aufgabe wird bei einer Vorrichtung der eingangs genannten Art gelöst, indem der Füllstromteiler mittels einer Lagerungseinrichtung beweglich relativ zu der Düsenanordnung gelagert ist. Eine solche Düsenanordnung kann beispielsweise aus zwei, drei, vier oder mehr Düsen gebildet sein. Durch eine solche Lagerungseinrichtung, mittels welcher der mindestens eine Füllstromteiler beweglich relativ zu der Düsenanordnung gelagert ist, wird die Montage einer erfindungsgemäßen Vorrichtung wesentlich erleichtert. Einerseits wird hierdurch der Vorgang des Montierens selber vereinfacht, da durch die Lagerungseinrichtung das Positionieren des Füllstromteilers zu der Düsenanordnung vereinfacht ist. Andererseits wird auch die Zeit, welche für eine Montage oder Reinigung notwendig ist, wesentlich reduziert. Als Füllstromteiler kann hier ein herkömmlicher Füllstromteiler eingesetzt werden. Dem Fachmann sind solche Füllstromteiler hinlänglich bekannt. Der Fachmann wird je nach Ausführung der Düsen und der Extrusionsaufgabe einen entsprechenden Füllstromteiler auswählen. Auf die genaue Beschreibung der Gestaltung eines solchen Füllstromteilers wird daher hier verzichtet.
Gemäß einer ersten bevorzugten Ausführungsform ist die Lagerungseinrichtung dazu eingerichtet, den Füllstromteiler auf einer definierten Bahn zu führen. Auf einer solchen Bahn ist der Füllstromteiler vorzugsweise relativ zu der Düsenanordnung in eine In-Eingriff-Position und eine Außer-Eingriff-Position bewegbar. Die In-Eingriff-Position ist dabei die Position, in der der Füllstromteiler mit der Düsenanordnung montiert bzw. montierbar ist. So ist eine Montage der Vorrichtung wesentlich vereinfacht, da ein korrektes Positionieren des Füllstromteilers zu der Düsenanordnung automatisch mittels der Lagerungseinrichtung geschieht.

Erfindungsgemäß weist die Lagerungseinrichtung mindestens eine Linearführung auf. Insbesondere eine Linearführung ist vorteilhaft, da eine lineare Bewegung eine einfache Bewegungsform ist und eine Linearführung einfach herstellbar ist. So werden zusätzlich die Fertigungskosten einer solchen Vorrichtung reduziert. Eine solche Linearführung kann beispielsweise als Schwalbenschwanzführung ausgebildet sein. Alternativ ist sie als Rollenkonstruktion ausgebildet. In einer weiteren Alternative ist der Füllstromteiler auf einer gekrümmten Bahn bewegbar geführt, beispielsweise indem die Lagerungseinrichtung über eine Schwenkeinrichtung verfügt, sodass der Füllstromteiler schwenkbar relativ zu der Düsenanordnung angeordnet ist.

In der erfindungsgemäßen Vorrichtung weist die Linearführung eine oder mehrere Schienen und eine oder mehrere an den Schienen geführte Rollen auf. Die Linearführung mittels Schiene und Rollen zu bilden, ist eine besonders einfache Möglichkeit die Linearführung zu gestalten. Hierdurch werden die Fertigungskosten der Vorrichtung weiter verringert. Beispielsweise kann eine Rolle oberhalb der Schiene und eine Rolle unterhalb der Schiene angeordnet sein. So ist auch ein Abheben des Füllstromteilers von der Schiene verhindert. Alternativ weist die Linearführung eine Schiene und eine Rolle auf, wobei eine zusätzliche Halterung angeordnet ist, die ein Abheben des Füllstromteilers von der Schiene verhindert. In einer weiteren Alternative ist keine Rolle vorgesehen, sondern ein Schlitten der mit der Schiene zusammenwirkt.

Besonders bevorzugt ist die Schiene als Rohr ausgebildet. Vorzugsweise weist das Rohr hohl eine geringe Wandstärke auf. Rohre sind in der Regel im Verhältnis zum Gewicht sehr biegesteif und eignen sich daher besonders zum Ausbilden einer Linearführung. Indem ein Rohr verwendet wird, wird die Fertigung weiter vereinfacht, da Rohre allgemein erhältlich sind. Zudem wird der Materialverbrauch zum Herstellen einer solchen Vorrichtung verringert, wodurch auch die Kosten sinken. Das Rohr kann beispielsweise mit Rollen zusammenwirken, welche an dem Füllstromteiler angeordnet sind. Alternativ ist der Füllstromteiler mittels einer Ringmanschette an dem Rohr geführt, welche verschieblich auf dem Rohr angeordnet ist.

Gemäß einem weiteren Aspekt der Erfindung oder einer bevorzugten Ausführungsform weist die Vorrichtung einen Düsenblock auf, der die mehreren Einlässe der Düsenanordnung aufweist. Vorzugsweise oder alternativ sind die Einlässe der Düsenanordnung und/oder die Düsen als Ausnehmungen in dem Düsenblock ausgebildet. Vorzugsweise oder alternativ sind die Einlässe der Düsenanordnung oder die Düsen in den Düsenblock mittels spanender Bearbeitung, beispielsweise Fräsen, eingebracht. Vorzugsweise umschließt der Düsenblock die Einlässe in einer im Wesentlichen radialen Richtung. Der Düsenblock ist vorzugsweise so ausgebildet, dass er eine Bewandung für die Düsen der Düsenordnung bildet. Insbesondere bevorzugt ist der Düsenblock um die Einlässe der Düsenanordnung herum im Wesentlichen einstückig ausgebildet.

Durch einen solchen Düsenblock wird die Montage einer erfindungsgemäßen Vorrichtung wesentlich vereinfacht. Es ist nicht erforderlich, einzelne Düsen aneinander zu befestigen, miteinander zu verschrauben oder ähnliches, sondern die Düsen sind in dem Düsenblock ausgebildet. Zudem wird durch diesen erfindungsgemäßen Düsenblock die Reinigung der Vorrichtung wesentlich vereinfacht, da komplizierte und verschmutzungsanfällige Verschraubungen, Steckverbindungen, Überlappungen und ähnliches erfindungsgemäß entfallen. Dadurch ist die Düsenanordnung einerseits einfacher und so gründlicher zu reinigen, andererseits ist auch die Zeit, welche zur Reinigung erforderlich ist, wesentlich verringert. Als Düsenblock soll hier nicht die bloße starre Verbindung von einer Mehrzahl von herkömmlichen Ko-/Extrusionsdüsen mittels Leitungen verstanden werden, sondern die Ausbildung der Düsen, bzw. Strömungskanäle, die die Düsen bilden, in einem Block. Dabei ist Block nicht auf einen rechteckigen Körper beschränkt, jede im Wesentlichen einstückige Form, welche eine Bewandung für die Düsen bildet ist erfindungsgemäß.

Es ist bevorzugt, dass der Düsenblock modular mehrteilig ausgebildet ist, wobei jeder Teil mindestens einen Abschnitt jeder der mehreren Düsen aufweist und die Teile lösbar aneinander befestigbar sind. Dadurch ist die Vorrichtung einfacher zu fertigen, da beispielsweise anspruchsvoll zu fertigende Formen wie Krümmer beispielsweise durch einzelne Teilmodule gebildet werden können. Ferner ist es so vorteilhaft möglich, verschiedene Düsengeometrien durch mehrere Module zu bilden. Beispielsweise kann ein erstes Modul die Einlässe und ein zweites Modul die Düsenauslässe der Düsenanordnung aufweisen. Alternativ oder zusätzlich kann ein drittes Modul einen Mittelabschnitt der Düsen aufweisen. Vorzugsweise sind die Module so ausgebildet, dass die Verbindungsflächen der Module die Düsen im Wesentlichen senkrecht zu Ihrer Längsrichtung durchsetzen. Vorzugsweise sind an den Modulen Dichtungselemente angeordnet, sodass die Module abdichtend verbindbar sind. Durch einen solchen modularen Aufbau wird zudem die Reinigung der Vorrichtung weiter vereinfacht. Die Module sind vorzugsweise so gestaltet, dass in ihnen jeweils Düsenabschnitte mit einfachen bzw. einfach zu reinigenden Geometrien ausgebildet sind. Vorzugsweise sind die einzelnen Module mittels bekannter Spann- und/oder Klemmmittel verbindbar. Insbesondere bevorzugt sind die einzelnen Abschnitte der Düsen als Strömungskanäle in den modularen Teilen ausgebildet. Die einzelnen Module bilden also vorzugsweise eine Bewandung für die Düsen. Vorzugsweise sind die Module einstückig, ohne Zusatzelemente und ähnliches ausgebildet. Hierdurch wird die Montage und Reinigung weiter vereinfacht. Alternativ können Zusatzeinsätze für die Düsen vorgesehen sein. Dies kann insbesondere vorteilhaft sein, falls spezielle Extrusionsaufgaben, wie beispielsweise Koextrusion, ausgeführt werden sollen.

In einer weiteren bevorzugten Ausführungsform oder einem weiteren Aspekt der Erfindung ist der Füllstromteiler unmittelbar benachbart an der Düsenanordnung lösbar befestigbar, sodass die Auslässe des Füllstromteilers mit den Einlässen der Düsenanordnung kommunizieren. So entfallen erfindungsgemäß insbesondere Rohre, Schläuche und ähnliches, welche die Auslässe des Füllstromteilers mit den Einlässen der Düsenanordnung verbinden. Vorzugsweise sind dabei die Auslässe des Füllstromteilers so mit den Einlässen der Düsenanordnung verbindbar, dass diese unmittelbar kommunizieren. Insbesondere entfallen Adapter, Verbindungsstücke und ähnliches. Vorzugsweise sind dabei an dem Füllstromteiler und/oder an der Düsenanordnung Dichtungselemente so angerordnet, dass die Auslässe mit den Einlässen dichtend verbindbar sind. Beispielsweise kann an den Auslässen des Füllstromteilers ein kreisförmiger Vorsprung angeordnet sein, der in eine kreisförmige Ausnehmung an den Einlässen der Düsenanordnung eingreift, sodass diese nach außen hin abgedichtet unmittelbar miteinander kommunizieren. Dies ist insbesondere vorteilhaft, wenn die mehreren Einlässe der Düsenanordnung in dem Düsenblock ausgebildet sind. Vorzugsweise können in einer solchen Ausführungsform auch die Auslässe des Füllstromteilers in einem Füllstromteilerblock ausgebildet sein.

Gemäß einer bevorzugten Ausführungsform der Vorrichtung ist der Füllstromteiler mittels einer Spanneinrichtung an der Düsenanordnung lösbar befestigbar. Alternativ oder vorzugsweise ist der Füllstromteiler mit der Düsenanordnung verspannbar. So entfällt insbesondere eine Verschraubung zwischen Füllstromteiler und Düsenanordnung, wodurch die Montage und Reinigung wesentlich vereinfacht wird. Vorzugsweise werden mittels der Spanneinrichtung die Auslässe des Füllstromteilers so gegen die Einlässe der Düsenanordnung gepresst, dass diese dichtend verbunden sind. Insbesondere ist auch hier bevorzugt, dass die Einlässe in dem Düsenblock ausgebildet sind. Eine solche Spanneinrichtung kann beispielsweise mit üblichen Spannmitteln, wie beispielsweise Hebeln und ähnlichem gebildet sein.

Gemäß einer weiteren bevorzugten Ausgestaltung der erfindungsgemäßen Vorrichtung weist der Füllstromteiler wenigstens einen Zentrierbolzen zum Positionieren des Füllstromteiler gegen die Düsenanordnung auf, und die Düsenanordnung weist wenigstens eine korrespondierende Zentrierausnehmung auf und die Spanneinrichtung wirkt so mit dem Zentrierbolzen und der Zentrierausnehmung zusammen, dass der Füllstromteiler mittels der Spanneinrichtung mit der Düsenanordnung positioniert lösbar befestigbar ist. Vorzugsweise ist der Füllstromteiler mit der Düsenanordnung definiert positioniert. Insbesondere kann das Positionieren des Füllstromteilers gegen die Düsenanordnung auch ein Ausrichten des Füllstromteilers gegenüber der Düsenanordnung umfassen. Ein solches definiertes Positionieren bzw. Ausrichten ist insbesondere mittels Zentrierbolzen und Zentrierausnehmung auf vorteilhafte Weise möglich, insbesondere da Zentrierbolzen in den Zentrierausnehmungen selbst zentrierend sind. So ist das exakte Positionieren von Füllstromteiler und Düsenanordnung gegeneinander möglich und die Montage der Vorrichtung wird weiter vereinfacht. Alternativ können andere Positionier- und/oder Zentriervorrichtungen, wie Absätze, Vorsprünge, Anschläge und ähnliches eingesetzt werden.

Ferner weist die Spanneinrichtung vorzugsweise mindestens ein bewegbares, insbesondere drehbares Exzenterelement auf. Ein solches Exzenterelement ist vorzugsweise an einer drehbaren Achse oder Welle ausgebildet, welche in einer zylindrischen Bohrung oder ähnlichem geführt ist. Das Exzenterelement ist dann vorzugsweise exzentrisch zu dieser Achse oder Welle ausgebildet. Durch Verdrehen einer solchen Achse oder Welle ist ein solches Exzenterelement dann mit einem Abschnitt eines zu verspannenden Elements in Verbindung bringbar, sodass das Element verspannt wird. Ein solches Exzenterelement ist eine besonders günstige platz- und materialsparende Art zwei Elemente oder Vorrichtungen miteinander zu verspannen. Ein solches Exzenterelement kann beispielsweise zylindrisch ausgebildet sein, jedoch exzentrisch an der Welle angeordnet sein. Alternativ ist es als Nocke, Kurve oder ähnliches ausgebildet.

Das Exzenterelement ist gemäß einer weiteren bevorzugten Ausführungsform an einem im Wesentlichen zylindrischen Spannstift ausgebildet, der drehbar an der Düsenanordnung gelagert ist. Dabei ist ein Abschnitt des Füllstromteilers so mit der Düsenanordnung in Eingriff bringbar, dass das Exzenterelement mit diesem Abschnitt zum Verspannen des Füllstromteilers gegen die Düsenanordnung zusammenwirkt. Insbesondere bevorzugt ist die Düsenanordnung in dem Düsenblock ausgebildet und das Exzenterelement drehbar an dem Düsenblock gelagert. Vorzugsweise weist der Spannstift an dem Exzenterelement abgewandten Ende einen Griffbereich zum Ergreifen und Betätigen des Spannstifts auf. So wird die Montage der Vorrichtung wesentlich vereinfacht, da nach dem Positionieren des Füllstromteilers gegenüber der Düsenanordnung diese durch ein einfaches Drehen des Spannstifts miteinander verspannbar sind und die Montage so abgeschlossen ist.

Gemäß einer bevorzugten Weiterbildung der Vorrichtung weisen die Zentrierbolzen Ausnehmungen auf, die mit dem Exzenterelement zum Verspannen in Eingrifft bringbar sind. Die Zentrierbolzen, welche vorzugsweise an dem Füllstromteiler angeordnet sind, greifen in Ausnehmungen an der Düsenanordnung, welche vorzugsweise in einem Düsenblock ausgebildet ist, ein. Das Exzenterelement greift in die Ausnehmung eines Zentrierbolzenz ein. Durch Drehen des Exzenterelements, bzw. Betätigen des Spannstifts wird dieser so relativ verdreht, dass der Füllstromteiler über die Zentrierbolzen gegen die Düsenanordnung gezogen bzw. verspannt wird. Auf diese Art und Weise sind keine zusätzlichen Vorsprünge oder ähnliches notwendig. Die Fertigung sowie auch die Montage und Reinigung der Vorrichtung werden wesentlich vereinfacht. Alternativ sind Spannstifte an dem Füllstromteiler angeordnet und greifen in Ausnehmungen an der Düsenanordnung, welche vorzugsweise in dem Düsenblock ausgebildet ist, ein.

Besonders bevorzugt weist die Düseneinheit mehrere erste Einlässe für mehrere erste Massenströme aus einem ersten Füllstromteiler auf und mehrere zweite Einlässe für mehrere Massenströme aus einem zweiten Füllstromteiler auf und die Düsen der Düsenanordnung sind als Koextrusionsdüsen ausgebildet, um mehrere Massenströme aus dem ersten bzw. dem zweiten Füllstromteiler im Wesentlichen koaxial zu extrudieren. Insbesondere vorzugsweise sind die beiden Füllstromteiler unmittelbar benachbart an der Düsenanordnung lösbar befestigbar. Insbesondere vorzugsweise sind die ersten und die zweiten Einlässe als Ausnehmung in dem Düsenblock angeordnet. Vorzugsweise sind dabei die ersten Einlässe in einem ersten Modul des modularen Düsenblocks angeordnet, die zweiten Einlässe in einem zweiten Modul des modularen Düsenblocks angeordnet und die Auslässe in einem dritten Modul des modularen Düsenblocks angeordnet. Insbesondere bei einer solchen Koextrusionsvorrichtung ist die vereinfachte Montage sowie die vereinfachte Reinigung besonders vorteilhaft, da Koextrusionsvorrichtungen kompliziert und aufwendig sind, insbesondere aufgrund der koaxialen Düsenführung.

Gemäß einer weiteren bevorzugten Ausführungsform sind die zwei Füllstromteiler an gegenüberliegenden Seiten der Düsenanordnung an dieser befestigbar. Dies ist insbesondere vorteilhaft, da die gegenüberliegende Anordnung der Füllstromteiler auch eine ideale Anordnung von mit dem Füllstromteiler verbindbaren Füllmaschinen oder Pumpen ermöglicht. Zudem wird so ein symmetrischer Aufbau der Düsenanordnung bzw. des Düsenblocks ermöglicht, wodurch die Fertigung einer solchen Düsenanordnung bzw. eines solchen Düsenblocks weiter vereinfacht wird.

In einer weiteren bevorzugten Ausführungsform weist die Spanneinrichtung mindestens ein erstes Exzenterelement zum Verspannen des ersten Füllstromteilers und ein zweites Exzenterelement zum Verspannen des zweiten Füllstromteilers auf. So ist es möglich, mit einer Spanneinrichtung beide Füllstromteiler gegen die Düsenanordnung zu verspannen, sodass die Auslässe beider Füllstromteiler mit den entsprechenden Einlässen der Düsenanordnung bzw. des Düsenblocks unmittelbar kommunizieren. Vorzugsweise ist dabei das erste Exzenterelement dazu eingerichtet mit Ausnehmungen am Zentrierbolzen des ersten Füllstromteilers zusammenzuwirken, das zweite Exzenterelement ist dazu eingerichtet, mit Ausnehmungen an Zentrierbolzen des zweiten Füllstromteilers zusammenzuwirken. So ist auch die Montage der Vorrichtung vereinfacht, da durch einen Spannvorgang bzw. durch ein Betätigen der Spanneinrichtung zwei Füllstromteiler mit der Düsenanordnung und/oder mit dem Düsenblock verbindbar sind.

In einer weiteren bevorzugten Ausführungsform ist die Spanneinrichtung dazu eingerichtet mindestens zwei Teile des modularen Düsenblocks lösbar miteinander zu verspannen. So wird mit der Spanneinrichtung nicht nur der Füllstromteiler gegen die Düsenanordnung bzw. den Düsenblock verspannt, sondern es werden auch zwei oder mehrere Teile bzw. Module des modularen Düsenblocks miteinander verspannt. So wird die Montage der Vorrichtung weiter vereinfacht. Vorzugsweise ist die Spanneinrichtung dazu eingerichtet, den ersten und den zweiten Füllstromteiler mit dem Düsenblock zu verspannen sowie zwei oder mehrere Teile bzw. Module des modularen Düsenblocks miteinander zu verspannen.

Der Spannstift weist gemäß einer bevorzugten Weiterbildung einen radial vorstehenden Vorsprung auf, der mit einer schraubenlinienförmig ausgebildeten Nut an einem Teil des Düsenblocks zusammenwirkt. Vorzugsweise ist der Spannstift an einem Teil des modularen Düsenblocks drehbar gelagert und erstreckt sich in einen zweiten Teil des modularen Düsenblocks hinein, wenn diese aneinander angeordnet sind. An diesem zweiten Teil ist vorzugsweise die schraubenlinienförmig ausgebildete Nut angeordnet, in die der radial vorstehende Vorsprung eingreift. So ist auf einfache Art und Weise der zweite Teil des modularen Düsenblocks gegen dem ersten Teil des modularen Düsenblocks verspannbar. Alternativ ist die Spanneinrichtung beispielsweise als Kipphebel ausgebildet, und der Spannstift weist einen Vorsprung auf, der durch Betätigen des Kipphebels so axial zu dem Spannstift verschieblich ist, dass der zweite Teil des modularen Düsenblocks gegen den ersten Teil des modularen Düsenblocks gezogen und verspannt wird.

Gemäß einem weiteren Aspekt der Erfindung wird die oben genannte Aufgabe bei einer Düsenanordnung mit mehreren Koextrusionsdüsen, die jeweils einen ersten Einlass und einen zweiten Einlass zum Aufnehmen zweier im Wesentlichen fließfähigen Lebensmittel-Massen aufweisen, zum Koextrudieren der Lebensmittel-Massen gelöst, indem die Düsenanordnung als Düsenblock ausgebildet ist. Der Düsenblock ist dabei erfindungsgemäß entsprechend einem Düsenblock mit den oben beschriebenen Merkmalen ausgebildet. Insbesondere ist der Düsenblock dabei modular mehrteilig ausgebildet, wobei ein erster modularer Teil bzw. ein Modul die ersten Einlässe der Koextrusionsdüsen aufweist, ein zweiter modularer Teil die zweiten Einlässe der Koextrusionsdüsen aufweist und ein dritter modularer Teil die Auslässe der Koextrusionsdüsen aufweist. Durch eine solche Düsenanordnung wird die Montage der Düsenanordnung wesentlich vereinfacht. Zudem wird auch die Reinigung einer solchen Düsenanordnung wesentlich vereinfacht. Dadurch kann insbesondere die Zeit zur Montage und Reinigung reduziert werden. Vorzugsweise weist eine solche Düsenanordnung eine Mehrzahl von Düsen auf, insbesondere zwei, drei, vier oder mehr Düsen.

In einer ersten bevorzugten Ausführungsform der Düsenanordnung weist der Düsenblock eine Spanneinrichtung auf, welche entsprechend den Merkmalen einer oben beschriebenen Spanneinrichtung gebildet ist. Insbesondere ist eine solche Spanneinrichtung dazu eingerichtet, die einzelnen modularen Teile des Düsenblocks lösbar miteinander zu verspannen. Beispielsweise kann dies mittels eines Spannhebels bewirkt werden. Alternativ mittels eines Spannstifts, welcher einen radial vorstehenden Vorsprung aufweist, der mit einer schraubenlinienförmig ausgebildeten Nut an einem modularen Teil des Düsenblocks zusammenwirkt.

Nachstehend wird die Erfindung anhand eines Ausführungsbeispiels unter Bezug auf die beiliegenden Figuren beschrieben. Es zeigen:
- Fig. 1: eine perspektivische Ansicht einer erfindungsgemäßen Vorrichtung;
- Fig. 2: eine Seitenansicht der Vorrichtung in einem nicht montierten Zustand;
- Fig. 3: eine Seitenansicht der Vorrichtung in einem montierten Zustand;
- Fig. 4: einen Schnitt E-E (Figur 6) durch die Vorrichtung aus Figur 3 in einem montierten Zustand;
- Fig. 5a: eine weitere Seitenansicht der Vorrichtung in einem montierten Zustand;
- Fig. 5b: einen Teilschnitt durch die Vorrichtung gem. Figur 5a;
- Fig. 5c: einen weiteren Teilschnitt durch die Vorrichtung gem. Figur 5a;
- Fig. 5d: einen weiteren Teilschnitt durch die Vorrichtung gem. Figur 5a;
- Fig. 6: eine Draufsicht auf die Vorrichtung in einem montierten Zustand;
- Fig. 7a: eine weitere Draufsicht der Vorrichtung; und
- Fig. 7b: einen Schnitt D-D durch die Vorrichtung gemäß Figur 7a.

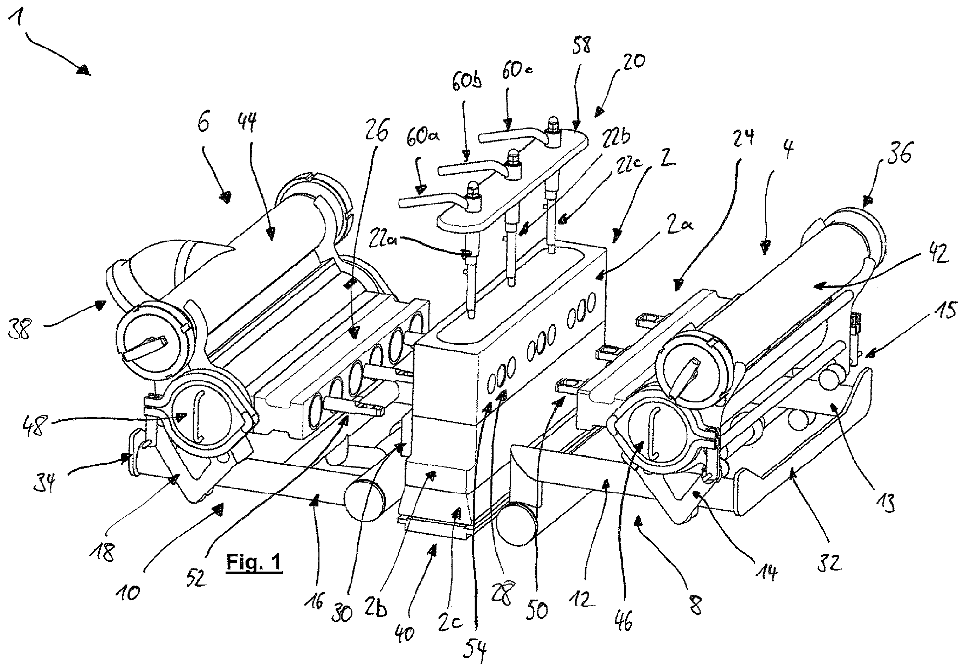

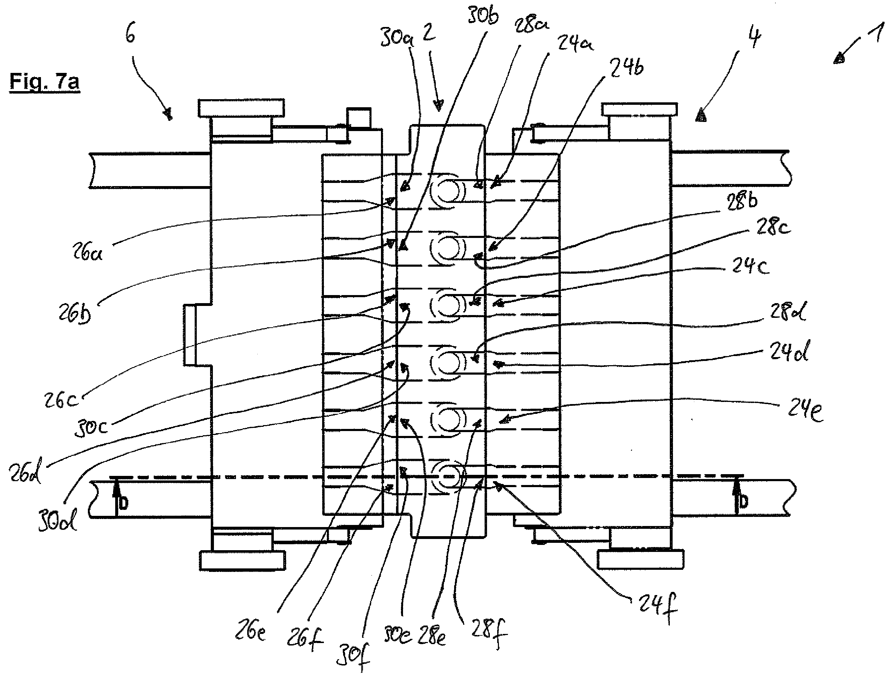

Die Vorrichtung 1 zum Extrudieren von fließfähigen Lebensmittel-Massen weist gemäß Figur 1 einen Düsenblock 2 auf, in dem eine Düsenanordnung ausgebildet ist. Dieser Düsenblock, insgesamt mit 2 bezeichnet, ist aus drei Teilen 2a, 2b, 2c gebildet, welche in diesem Ausführungsbeispiel als Module 2a, 2b, 2c ausgebildet sind. Die Düsen der in dem Düsenblock 2 ausgebildeten Düsenanordnung sind gemäß diesem Ausführungsbeispiel als Koextrusionsdüsen ausgebildet. Alternativ können sie jedoch auch als Extrusionsdüsen für nur eine Lebensmittel-Masse oder auch als Düsen für mehr als zwei verschiedene Lebensmittel-Massen gebildet sein. Sie weisen eine Mehrzahl erste Einlässe 28 (in diesem Ausführungsbeispiel sechs Stück 28a, 28b, 28c, 28d, 28e, 28f; vgl. Figur 7a), eine Mehrzahl zweite Einlässe 30 (in diesem Ausführungsbeispiel sechs Stück 30a, 30b, 30c, 30d, 30e, 30f; vgl. Figur 7a) und Auslässe 40 (in diesem Ausführungsbeispiel ebenfalls sechs Stück, jedoch in den Figuren nicht einzeln gezeigt) auf. Dabei sind jeweils ein erster Einlass, bspw. Einlass 28a, und ein zweiter Einlass, bspw. Einlass 30a sowie ein Auslass einer Düse zugeordnet. Die ersten Einlässe, insgesamt mit 28 bezeichnet, sind in dem ersten Modul 2a ausgebildet, die zweiten Einlässe, insgesamt mit 30 bezeichnet, sind in dem zweiten Modul 2b ausgebildet und die Auslässe, insgesamt mit 40 bezeichnet sind in dem dritten Modul 2c ausgebildet. Die ersten Einlässe 28 und die zweiten Einlässe 30 sind dabei an gegenüberliegenden Seiten des Düsenblocks 2 ausgebildet.

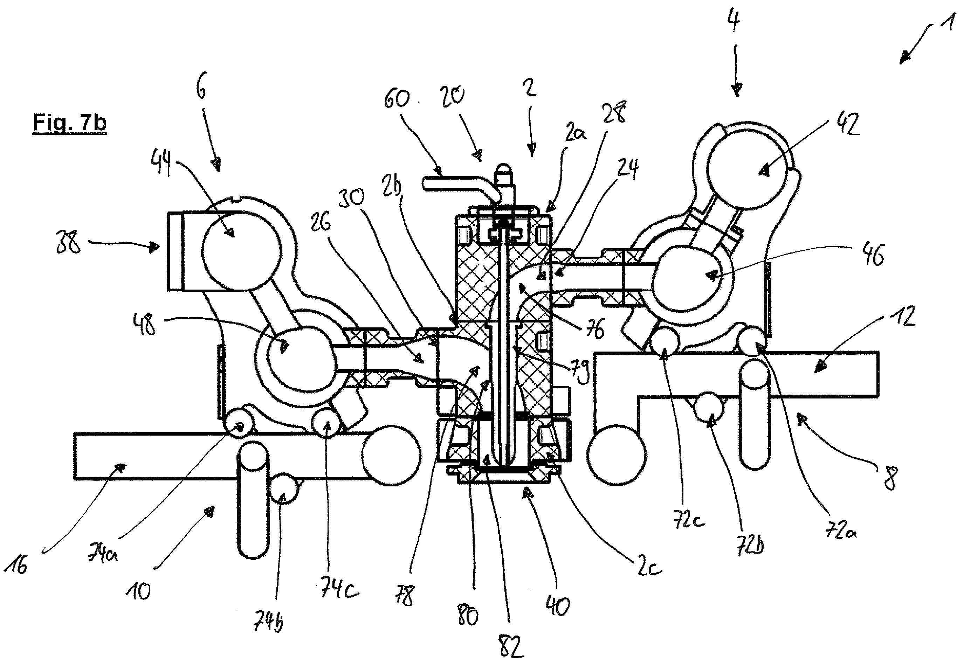

An jeder dieser Seiten ist ein Füllstromteiler 4, 6 angeordnet. Jeder Füllstromteiler 4, 6 weist einen Einlass 36, 38 und eine Mehrzahl Auslässe, insgesamt mit 24, 26 bezeichnet (hier jeweils sechs Stück 24a, 24b, 24c, 24d, 24e, 24f, 26a, 26b, 26c, 26d, 26e, 26f; vgl. Figur 7) auf. Die Einlässe 36, 38 der Füllstromteiler 4, 6 sind mit Füllmaschinen oder Vakuumpumpen oder ähnlichem verbindbar, über die den Füllstromteilern 4, 6 ein kontinuierlicher Massenstrom an Lebensmittel-Masse zugeführt wird. Ferner weisen die Füllstromteiler 4, 6 ein Verteilrohr 42, 44 auf, welches mit der Stromteilungskammer 46, 48 verbunden ist. In der Stromteilungskammer 46, 48 sind beispielsweise Flügelzellenräder oder ähnliches angeordnet, um den Massenstrom, welcher über die Einlässe 36, 38 dem Füllstromteiler 4, 6 zugeführt wird in jeweils sechs Massenströme aufzuteilen, welche aus der Mehrzahl an Auslässen 24, 26 der Füllstromteiler 4, 6 abgegeben werden. Zur genauen Ausbildung eines solchen Füllstromteilers sind dem Fachmann verschiedene Mittel bekannt.

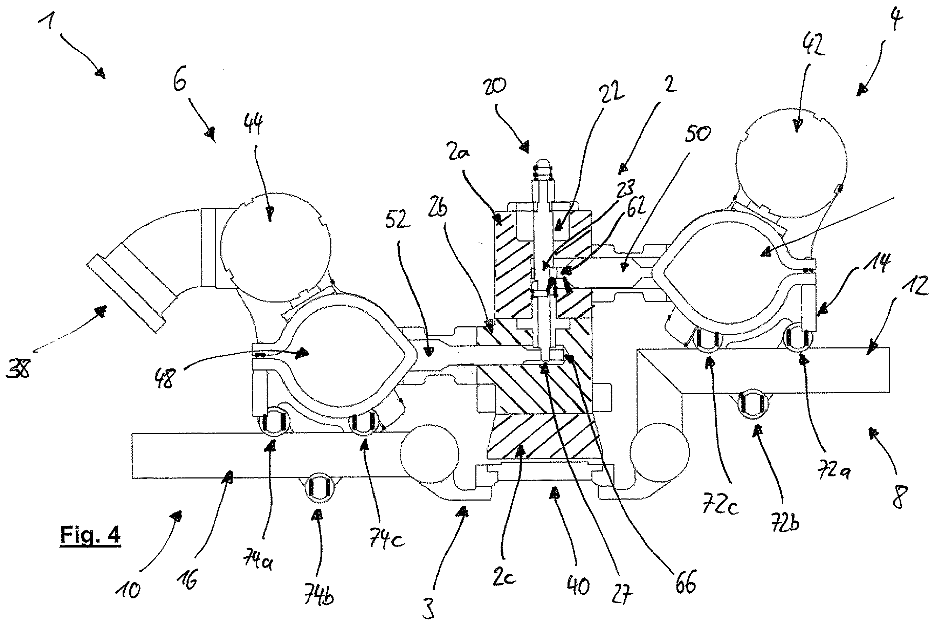

Die Füllstromteiler 4, 6 sind mittels einer Lagerungseinrichtung 8, 10 beweglich relativ zu der Düsenanordnung, welche in dem Düsenblock 2 ausgebildet ist, gelagert. Die Lagerungseinrichtung 8, 10 ist gemäß diesem Ausführungsbeispiel jeweils mittels zweier paralleler Rohre 12, 13, 16, 17 gebildet auf denen jeweils ein Füllstromteiler 4, 6 mittels jeweils zweier Laufkatzen 14, 15, 18, 19 relativ zu dem Düsenblock verfahrbar ist. Jede Laufkatze 14, 15, 18, 19 weist dabei jeweils drei Rollen 72a, 72b, 72c, 74a, 74b, 74c (Figur 4) auf. Jeweils zwei Rollen 72a, 72c, 74a, 74c sind bezogen auf Figur 4 oberhalb des Rohres 12, 16 angeordnet, jeweils eine Rolle 72b, 74b unterhalb des Rohres 12, 16. Dadurch ist der Füllstromteiler 4, 6 auch gegen ein Verkippen gesichert.

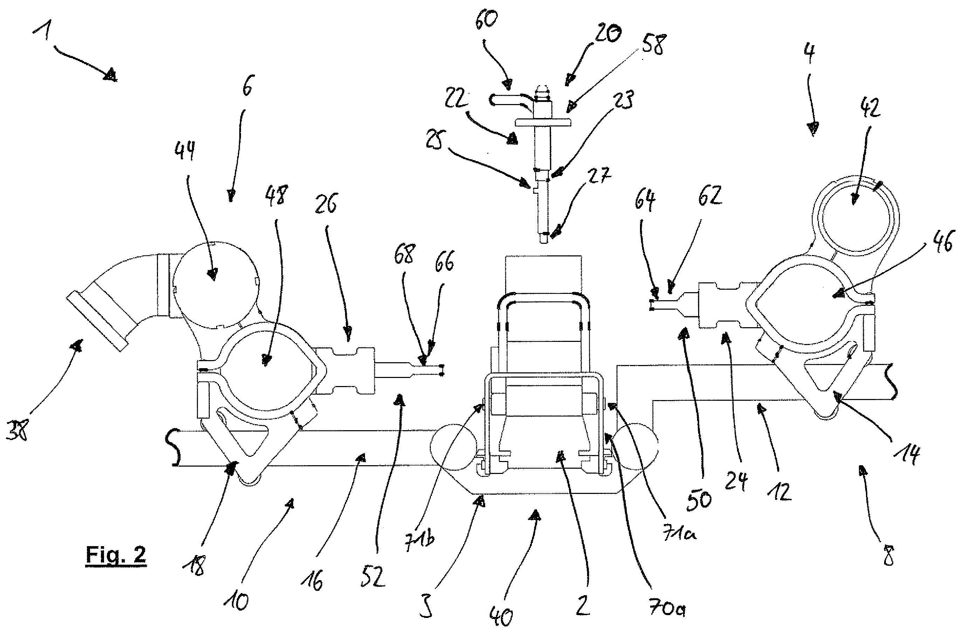

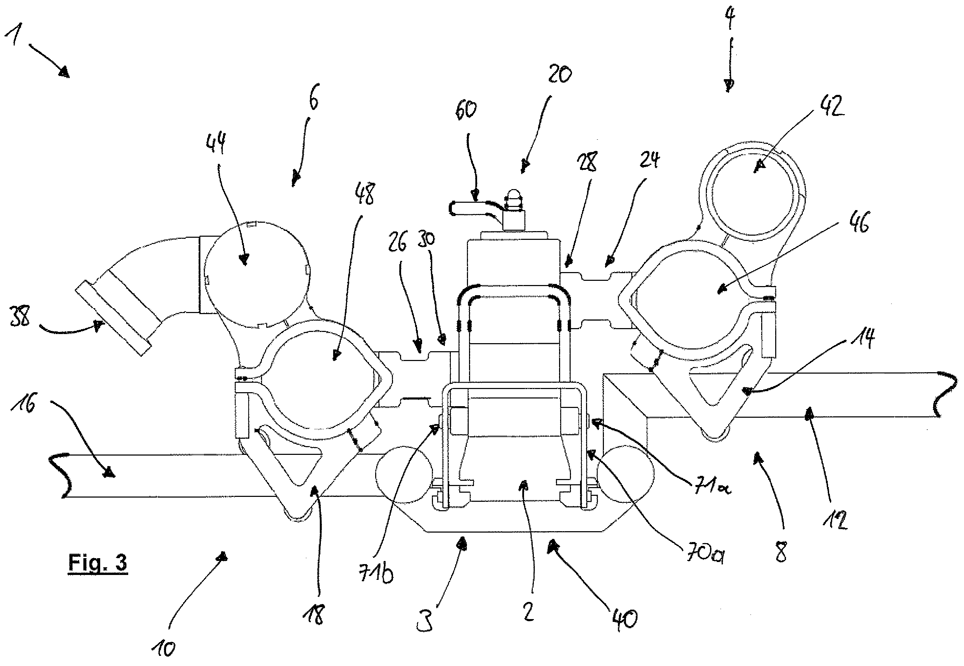

Mittels der Lagerungseinrichtung 8, 10, welche gemäß diesem Ausführungsbeispiel als Linearführung ausgebildet ist, sind die Füllstromteiler 4, 6 zwischen einer Außer-Eingriff-Position (Figuren 1, 2) und einer In-Eingriff-Position (Figuren 3, 4) linear hin und her bewegbar. Das Bewegen in die Außer-Eingriff-Position ist dabei durch ein Endblech 32, 34 so begrenzt, dass der Füllstromteiler 4, 6 nicht von der Lagerungseinrichtung 8, 10 entfernbar ist. Das Bewegen der Füllstromteiler 4, 6 in die In-Eingriff-Position ist durch den Düsenblock 2 begrenzt, wobei die Füllstromteiler 4, 6 in der In-Eingriff-Position unmittelbar benachbart zu dem Düsenblock 2 und somit der Düsenanordnung angeordnet sind. Die sechs Auslässe 24 des ersten Füllstromteilers 4 sind dann mit den ersten Einlässen 28 der Düsenanordnung in Kommunikation, die sechs Auslässe 26 des zweiten Füllstromteilers 6 sind dann mit den zweiten Einlässen 30 des Düsenblocks in Kommunikation (siehe auch Figur 7a).

Zur genaueren Positionierung der Füllstromteiler 4, 6 zu dem Düsenblock 2 weisen die Füllstromteiler 4, 6 jeweils drei Zentrierbolzen 50, 52 auf und der Düsenblock weist auf jeder Seite drei Zentrierausnehmungen 54, 56 auf, in die die Zentrierbolzen 50, 52 zentrierend eingreifen. An den vorderen, dem Düsenblock 2 zugewandten Enden der Zentrierbolzen 50, 52 sind Eingriffsabschnitte 62, 66 zum Zusammenwirken der Spanneinrichtung 20 angeordnet. In diesen Eingriffsabschnitten 62, 66 sind jeweils Ausnehmungen 64, 68 angeordnet.

Die Spanneinrichtung 20 weist drei Spannstifte 22a, 22b, 22c auf, die mittels einer Platte 58 miteinander so verbunden sind, dass sie im Wesentlichen parallel zueinander angeordnet sind. So können die drei Spannstifte 22a, 22b, 22c gleichzeitig in den Düsenblock 2 eingesetzt werden. Dies reduziert weiter die Montagezeit.

Sind die beiden Füllstromteiler 4, 6, wie in Figur 4 gezeigt in die In-Eingriff-Position gebracht, kann die Spanneinrichtung 20 in den Düsenblock 2 eingeführt werden, wobei dann die Spannstifte 22a, 22b, 22c, insgesamt mit 22 bezeichnet, durch Öffnungen im Düsenblock hindurch ragen und mit den Eingriffsabschnitten 62, 66 der Zentrierbolzen 50, 52 der Füllstromteiler 4, 6 zusammenwirken. Dazu weist jeder Spannstift 22 (siehe Figur 2) ein erstes Exzenterelement 23 und ein zweites Exzenterelement 27 auf. Das erste Exzenterelement 23 ist dabei so angeordnet, dass es mit dem Eingriffsabschnitt 62 des Zentrierbolzens 50 des ersten Füllstromteilers 4 zusammenwirkt, das zweite Exzenterelement 27 ist dabei so angeordnet, dass es mit dem Eingriffsabschnitt 66 des Zentrierbolzens 52 des zweiten Füllstromteilers 6 zusammenwirkt. In einem, bezogen auf die Figuren, oberen Ende der Spannstifte 22 ist jeweils ein Handgriff 60a, 60b, 60c (Figur 1), insgesamt mit 60 bezeichnet, zum Betätigen der Spannstifte 22 angeordnet. Durch das Betätigen bzw. Drehen der Spannstifte 22 werden die Exzenterelemente 23, 27 so verdreht, dass die beiden Füllstromteiler 4, 6 mittels der Zentrierbolzen 50, 52 gegen den Düsenblock 2 gepresst werden. Durch das Betätigen der Spanneinrichtung 20 können also die beiden Füllstromteiler 4, 6 gleichzeitig gegen den Düsenblock 2 verspannt werden.

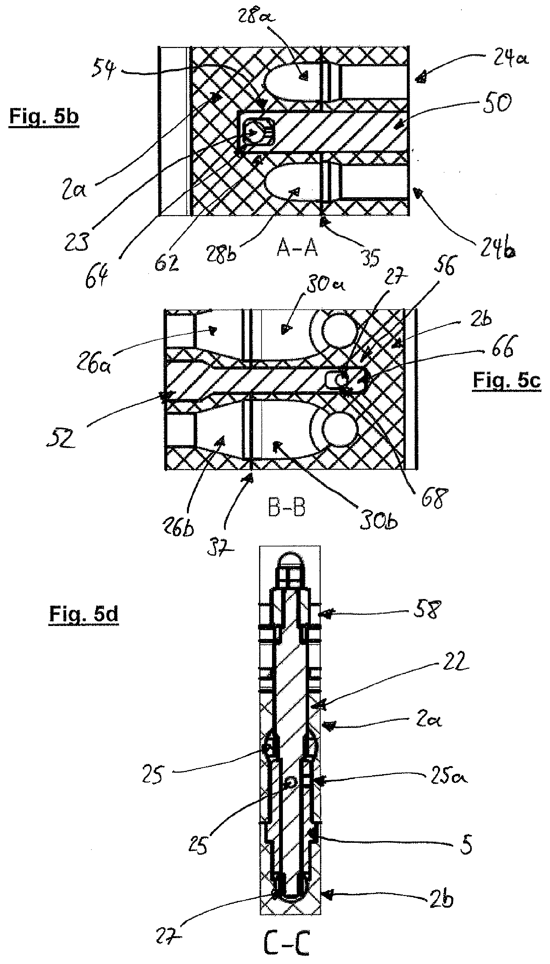

Ferner weist jeder Spannstift 22 einen Dorn 25 auf, der sich radial von dem Spannstift 22 wegerstreckt. Dieser Dorn 25 ist dazu eingerichtet mit einem Abschnitt des zweiten Moduls 2b des Düsenblocks 2 zum Verspannen des zweiten Moduls 2b zu dem ersten Modul 2a zusammenzuwirken. Dazu ist an dem zweiten Modul 2b eine schraubenlinienförmig ausgebildete Nut 25a (Figur 5d) angebracht. So werden durch das Betätigen der Spanneinrichtung 20 einerseits die beiden Füllstromteiler 4, 6 gegen den Düsenblock 2 verspannt, andererseits werden auch die beiden Module 2a, 2b gegeneinander verspannt. An den Kontaktflächen sind zur besseren Abdichtung Dichtringe angeordnet (in den Figuren nicht gezeigt).

Wie aus Figuren 2 und 3 ersichtlich, ist das dritte Modul 2c des Düsenblocks 2, in welchem die Auslässe 40 angeordnet sind, auf einem Gestell 3 der Vorrichtung 1 angeordnet. An dem Gestell 3 sind zwei Arretierhebel 70a, 70b (siehe auch Figur 7a) schwenkbar angeordnet. Diese Arretierhebel 70a, 70b sind dazu eingerichtet, in Vorsprünge 71 a, 71 b (Figuren 2, 3) an dem zweiten Modul 2b einzugreifen, und so das zweite Modul 2b auf das dritte Modul 2c zu pressen. So sind auch das zweite und dritte Modul 2a, 2c gegeneinander verspannt.

Bezogen auf die Figuren 2, 3 und 4 kann unterhalb der Vorrichtung 1 beispielsweise ein Förderband angeordnet sein, auf das die extrudierte Lebensmittel-Masse aus den Auslässen 40 in dem dritten Modul 2c abgegeben wird und mittels dem diesen dann von der Vorrichtung 1 wegtransportiert wird. Alternativ können hier andere Auffangeinrichtungen wie Schalen oder Ähnliches angeordnet sein.

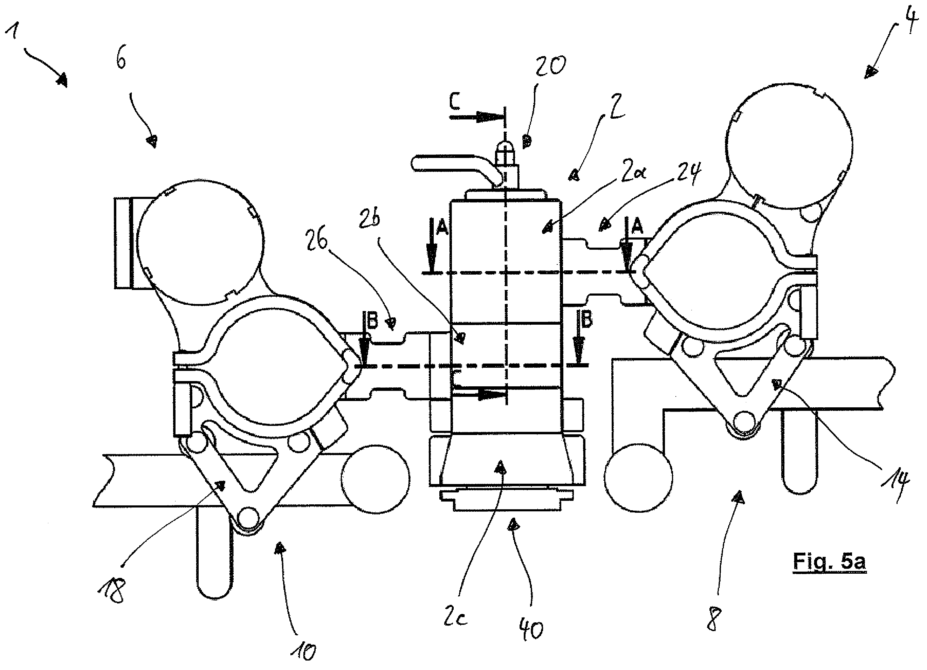

Die Figuren 5a bis 5d verdeutlichen nochmal das Zusammenwirken von Zentrierbolzen 50, 52 mit den Zentrierausnehmungen 54, 56 sowie der Spanneinrichtung 20 als auch den Verlauf der Düsen in dem Düsenblock 2. Figur 5a dient demnach im Wesentlichen dazu, die Lage der Schnittdarstellungen in den Figuren 5b bis 5d an der Vorrichtung 1 zu verdeutlichen. Demnach verläuft Schnitt A-A (Figur 5b) horizontal, bezogen auf eine übliche Ausrichtung der Vorrichtung 1 durch den Düsenblock 2 sowie axial durch die Auslässe 24 des ersten Füllstromteilers 4. Schnitt B-B (Figur 5c) verläuft ebenso horizontal und axial zu den Auslässen 26 des zweiten Füllstromteilers 6. Schnitt C-C (Figur 5d) verläuft schließlich vertikal bezogen auf eine übliche Ausrichtung der Vorrichtung 1 durch den Düsenblock 2 und axial durch einen Spannstift 22 der Spanneinrichtung 20.

Gemäß Schnitt A-A (Figur 5b) ist ein Zentrierbolzen 50 des ersten Füllstromteilers (in Figur 5b nicht gezeigt) zwischen zwei Auslässen 24a, 24b des ersten Füllstromteilers angeordnet. In der In-Eingriff-Position gemäß Figur 5a, erstreckt sich dieser Zentrierbolzen 50 in eine Zentrierausnehmung 54 an dem ersten Modul 2a des modularen Düsenblocks 2. Der Zentrierbolzen 50 weist an einem vorderen Ende einen Eingriffsabschnitt 62 auf, in dem eine Ausnehmung 64 als Durchgangsbohrung ausgebildet ist. Durch diese Ausnehmung 64 erstreckt sich der Spannstift 22 so, dass das Exzenterelement 23 in der Ausnehmung 64 angeordnet ist. Durch Drehen des Spannstiftes 22 wird das Exzenterelement 23 relativ zu dem Modul 2a des Düsenblocks 2 bewegt und kommt mit einem inneren Abschnitt der Ausnehmung 64 so in Kontakt, dass der Zentrierbolzen 50 in Richtung des Düsenblocks 2 gezogen wird. Indem der Zentrierbolzen 50 in der Zentrierausnehmung 54 im Wesentlichen selbstzentrierend angeordnet ist, sind die beiden Auslässe 24a, 24b des Füllstromteilers 4 definiert positioniert ausgerichtet zu den beiden Einlässen 28a, 28b des Modul 2a des Düsenblocks 2 (siehe Figur 5b). An der Kontaktfläche 35 zwischen dem Füllstromteiler 4 und dem Modul 2a des Düsenblocks 2 können Dichtungselemente (nicht gezeigt) angeordnet sein, um eine bessere Dichtung zwischen Füllstromteiler 4 und Düsenblock 2 zu erreichen. Die Einlässe 28a, 28b des Düsenblocks 2 führen gemäß diesem Ausführungsbeispiel den inneren Massenstrom in der Koextrusion, das heißt über die Einlässe 28a, 28b wird die Füllung eines zu füllenden Produkts eingeführt.

Auf ähnliche Art und Weise wirkt auch der zweite Füllstromteiler 6 mit dem Düsenblock 2 zusammen (Schnitt B-B, Figur 5c). An dem zweiten Füllstromteiler 6 ist der Zentrierbolzen 52 angeordnet, welcher in die Zentrierausnehmung 56 an dem zweiten Modul 2b des modularen Düsenblocks 2 greift. Über den Zentrierbolzen 52 und die Zentrierausnehmung 56 ist auch der zweite Füllstromteiler 6 definiert positioniert und gegenüber dem Düsenblock 2 ausgerichtet. Die Auslässe 26a, 26b des zweiten Füllstromteilers 6 (in Figur 5c nicht gezeigt) sind unmittelbar in Kommunikation mit den Einlässen 30a, 30b des zweiten Moduls 2b des modularen Düsenblocks 2. An der Kontaktfläche 37 zwischen zweitem Füllstromteiler 6 und Düsenblock 2 können zur besseren Abdichtung Dichtungselemente, wie beispielsweise O-Ringe (nicht gezeigt) angeordnet sein.

In einem vorderen Ende des Zentrierbolzens 52 ist ein Eingriffsabschnitt 66 angeordnet, in dem eine Ausnehmung 68 als Durchgangsbohrung angeordnet ist. In diese Durchgangsbohrung greift das zweite Exzenterelement 27 des Spannstifts 22 so ein, dass bei einem Drehen des Spannstifts 22 das zweite Exzenterelement 27 relativ zu dem Düsenblock 2 bewegbar ist und so gegen einen inneren Abschnitt der Ausnehmung 68 bewegbar ist, dass der Zentrierbolzen 52 in Richtung des modularen Düsenblocks 2 gezogen wird und der Füllstromteiler 6 so gegen den Düsenblock 2 verspannt wird.

Aus Schnitt C-C (Figur 5d) ist einerseits der genauer Querschnitt des Spannstifts 22 zu erkennen, als auch die Funktionsweise des Doms 25. Demnach hat der Spannstift 22 eine zu seinem unteren Ende hin, bezogen auf Figur 5d, abnehmenden Querschnitt. So ist es möglich, dass mit dem Spannstift 22 beide Füllstromteiler 4, 6 bzw. beide Zentrierbolzen 50, 52 gegen den Düsenblock 2 gespannt werden können. Der Spannstift 22 erstreckt sich durch die Ausnehmung 64 im Zentrierbolzen 50 hindurch und kommt so mit seinem unteren Ende mit dem Exzenterelement 27 in Eingriff mit Zentrierbolzen 52.

An dem zweiten Modul 2b ist ein Einsatz 5 angeordnet, der fest mit Modul 2b verbunden ist. Einsatz 5 erstreckt sich in Modul 2a hinein. So ist die Montage der Vorrichtung 1 erleichtert, da Modul 2a einfach auf den Einsatz 5 auf Modul 2b aufsetzbar ist. Der Spannstift 22 erstreckt sich durch eine Bohrung im Einsatz 5 hindurch. Einsatz 5 weist eine schraubenlinienförmige Nut 25a auf, in die der Dorn 25 eingreift. Diese Nut 25a ist so ausgebildet, dass beim Drehen des Spannstifts 22 dieser in Richtung von Modul 2b gezogen wird und so Modul 2a gegen Modul 2b verspannt wird.

Gemäß diesem Ausführungsbeispiel ist die Vorrichtung 1 stets als Koextrusionsvorrichtung zum Koextrudieren zweier Lebensmittels-Massenströme ausgebildet. Der Düsenblock 2 ist stets in drei Module 2a, 2b, 2c unterteilt. In einer Alternative kann der Düsenblock 2 auch nur aus zwei Modulen gebildet sein, beispielsweise, wenn nur eine Lebensmittel-Masse zu extrudieren ist. Dann kann beispielsweise Modul 2a entfallen. Sollen beispielsweise drei verschiedene Lebensmittel-Massen koextrudiert werden kann der Düsenblock 2 auch vier Module aufweisen. Die Zahl der Module muss jedoch nicht abhängig von der Zahl der zu extrudierenden Lebensmittel-Massen sein, vielmehr kann die Aufteilung der Module so gewählt werden, dass eine einfache Fertigung der Module sowie eine leichte Montage und Reinigung erzielt werden.

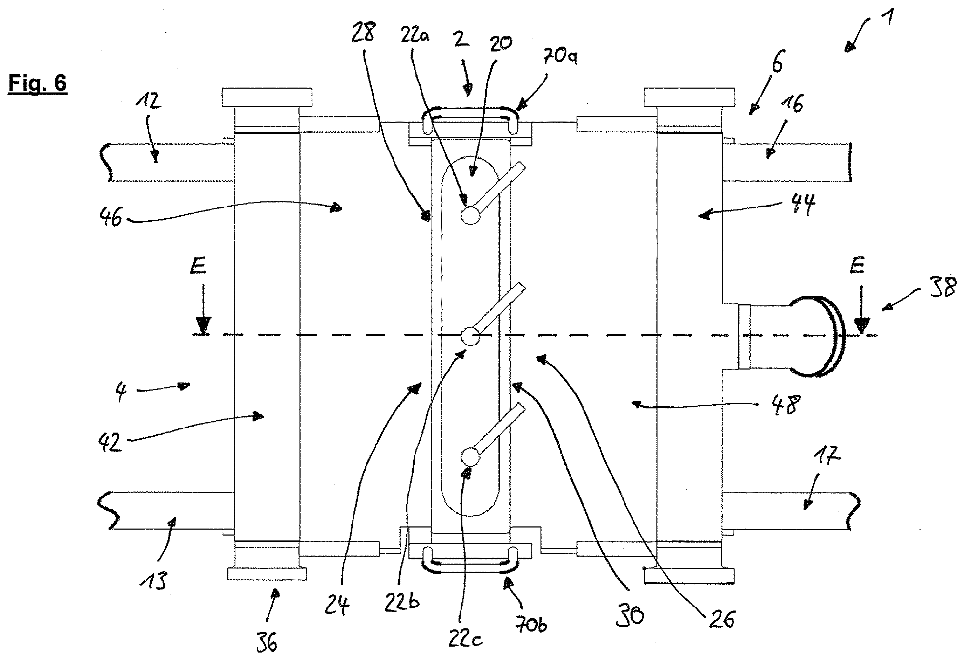

Figuren 6 und 7a zeigen zwei Draufsichten der Vorrichtung 1, wobei in Figur 7a die Strömungskanäle der Düsenanordnung in dünnen Linien eingezeichnet sind.

Gemäß Figur 6 sind die beiden Füllstromteiler 4, 6 mit dem Düsenblock 2 in Eingriff, die Spanneinrichtung 20 ist aktiviert und die Arretierhebel 70a, 70b sind in Eingriff mit dem Düsenblock 2. Die Füllstromteiler 4, 6 sind unmittelbar benachbart zu dem Düsenblock lösbar an diesem befestigt. Die Auslässe 24a, 24b, 24c, 24d, 24e, 24f des ersten Füllstromteilers 4 kommunizieren unmittelbar mit den ersten Einlässen 28a, 28b, 28c, 28d, 28e, 28f des Düsenblocks 2 in dem Modul 2a und die Auslässe 26a, 26b, 26c, 26d, 26e, 26f des zweiten Füllstromteilers 6 kommunizieren unmittelbar mit den zweiten Einlässen 30a, 30b, 30c, 30d, 30e, 30f des Düsenblocks 2 (Figur 7a) in dem Modul 2b. Insbesondere sind keine Rohre, Schläuche oder ähnliches zwischen den Auslässen 24, 26 der Füllstromteiler 4, 6 und den Einlässen 28, 30 des Düsenblocks 2 angeordnet. Auch sind keine Verschraubungen, wie Überwurfmuttern und ähnliches angeordnet, wodurch die Montage und Reinigung wesentlich vereinfacht wird.

Schnitt D-D gemäß Figur 7a ist in Figur 7b dargestellt. Dieser Schnitt verläuft nicht wie Schnitt C-C aus Figur 5d durch einen Spannstift 22 und Zentrierbolzen 50, 52, sondern durch die Strömungskanäle, welche aus mehreren Strömungskanal-Abschnitten 76, 78, 79, 82 gebildet sind und gemeinsam die Düsen der Düsenanordnung bilden, welche in dem Düsenblock 2 ausgebildet sind. Auch in Figur 7b sind die Füllstromteiler 4, 6 in einer in Eingriff Position mit dem Düsenblock 2. Düsenblock 2 ist modular aus drei Modulen 2a, 2b, 2c ausgebildet, wobei jedes Modul jeweils wenigstens einen Strömungskanal-Abschnitt 76, 78, 79, 82 jeder Düse aufweist. Die Düse ist gemäß diesem Ausführungsbeispiel als Koextrusionsdüse ausgebildet. Ein erster Strömungskanal-Abschnitt 76 einer Düse ist im ersten Modul 2a als im Wesentlichen vierteilkreisförmiger Kanal ausgebildet. An einem Ende steht dieser Strömungskanal-Abschnitt 76 unmittelbar in Kommunikation mit dem Auslass 24 des Füllstromteilers 4. An dem anderen Ende steht dieser Strömungskanal-Abschnitt 76 in unmittelbarer Kommunikation mit einem Abschnitt eines weiteren Strömungskanal-Abschnitts 79 der Düse, welcher in dem zweiten Modul 2b des Düsenblocks 2 angeordnet ist. In dem zweiten Modul 2b ist zudem ein zweiter viertelkreisförmiger Strömungskanal-Abschnitt 78 angeordnet, der an seinem Einlass 30 mit dem Auslass 26 des zweiten Füllstromteilers 6 unmittelbar in Kommunikation ist. In diesen Strömungskanal-Abschnitt 76 mündet Strömungskanal-Abschnitt 79 im Wesentlichen koaxial, um zwei Lebensmittel-Massenströme aus den beiden Füllstromteilern 4, 6 zu koextrudieren. In dem Mündungsbereich ist eine Hülse 80 in dem zweiten Modul 2b angeordnet, um diese Koextrusion zu ermöglichen. Durch die Wahl des Durchmessers und der Form dieser Hülse 80 können Form sowie Durchmesser der Füllung des zu erstellenden Produktes gewählt werden. In dem dritten Modul 2c des modularen Düsenblocks 2 ist schließlich ein letzter Strömungskanal-Abschnitt 82 angeordnet, der in den Auslass 40 mündet. Aus diesem Auslass 40 treten die koextrudierten Lebensmittel-Massen aus. Hier ist vorteilhafterweise noch eine Trennvorrichtung angeordnet (nicht gezeigt), beispielsweise ein Messer oder eine Trennscheibe, um die Lebensmittel-Massenströme zu trennen. Je nach Führung eines solchen Messers können dann auch kugelförmige Lebensmittel-Massen extrudiert werden.

Die einzelnen Strömungskanal-Abschnitte 76, 78, 79, 82 sind vorzugsweise so in den Modulen 2a, 2b, 2c angeordnet, dass die Module 2a, 2b, 2c im Wesentlichen einstückig sind. Die Module 2a, 2b, 2c bilden vorzugsweise eine Bewandung für die Strömungskanal-Abschnitte 76, 78, 79, 82. Insbesondere bevorzugt sind die einzelnen Strömungskanal-Abschnitte 76, 78, 79, 80 in die einzelnen Module 2a, 2b, 2c hinein gefräst. Alternativ werden die einzelnen Module 2a, 2b, 2c mittels urformender Verfahren beispielsweise Gießen oder aufbauender Verfahren gebildet.

## Patentansprüche

1. Vorrichtung (1) zum Extrudieren von fließfählgen Lebensmittel-Massen, mit
wenigstens einem Füllstromteiler (4, 6), welcher einen Einlass (36, 38) zum Einleiten der fließfählgen Masse und mehrere Auslässe (24, 26) zum Abgeben mehrerer Massen-Ströme der fließfähigen Masse aufweist, und
einer Düsenanordnung, mit mehreren Düsen, welche jeweils einen mit einem Auslass des Füllstromteilers (4, 6) verbindbaren Einlass (28, 30) und einen Auslass (40) zum Extrudieren der fließfähigen Masse aufweist,
**dadurch gekennzeichnet, dass** der Füllstromteiler (4, 6) mittels einer Lagerungseinrichtung (8, 10) beweglich relativ zu der Düsenanordnung gelagert ist,
die Lagerungseinrichtung (8, 10) mindestens eine Linearführung aufweist, und
die Linearführung eine oder mehrere Schienen und/oder Rohre (12, 13, 16, 17) und eine oder mehrere an der Schiene und/oder dem Rohr (12, 13, 16, 17) geführte Rollen (72a, 72b, 72c, 74a, 74b, 74c) aufweist.

2. Vorrichtung nach Anspruch 1, **dadurch gekennzeichnet, dass** die Lagerungselnrichtung (8, 10) dazu eingerichtet ist den Füllstromteiler (4, 6) auf einer definierten Bahn zu führen.

3. Vorrichtung nach einem der vorstehenden Ansprüche,
**gekennzeichnet durch** einen Düsenblock (2), der die mehreren Einlässe (28, 30) der Düsenanordnung aufweist.

4. Vorrichtung nach Anspruch 3,
**dadurch gekennzeichnet, dass** der Düsenblock (2) modular mehrteilig ist, wobei jeder Teil (2a, 2b, 2c) mindestens einen Abschnitt (76, 78, 79, 82) jeder der mehreren Düsen aufweist und die Teile (2a, 2b, 2c) lösbar aneinander befestigbar sind.

5. Vorrichtung nach Anspruch 4,
**dadurch gekennzeichnet, dass** die Abschnitte (76, 78, 79, 82) der Düsen als Strömungskanäle in den modularen Teilen (2a, 2b, 2c) ausgebildet sind.

6. Vorrichtung nach einem der vorstehenden Ansprüche,
**dadurch gekennzeichnet, dass** der Füllstromteiler (4, 6) unmittelbar benachbart an der Düsenanordnung lösbar befestigbar ist, so dass die Auslässe (24, 26) des Füllstromteilers (4, 6) mit den Einlässen (28, 30) der Düsenanordnung kommunizieren.

7. Vorrichtung nach Anspruch 6,
**dadurch gekennzeichnet, dass** der Füllstromteiler (4, 6) mittels einer Spanneinrichtung (20) an der Düsenanordnung lösbar befestigbar ist.

8. Vorrichtung nach Anspruch 7,
**dadurch gekennzeichnet, dass** der Füllstromteiler (4, 6) wenigstens einen Zentrierbolzen (50, 52) zum Positionieren des Füllstromteilers (4, 6) gegen die Düsenanordnung aufweist, und die Düsenanordnung wenigstens eine korrespondierende Zentrierausnehmung (54, 56) aufweist und die Spanneinrichtung (20) so mit dem Zertrierbolzen (50, 52) und der Zentrierausnehmung (54, 56) zusammenwirkt, dass der Füllstromteiler (4, 6) mittels der Spanneinrichtung (20) mit der Düsenanordnung positioniert lösbar befestigbar ist.

9. Vorrichtung nach Anspruch 7 oder 8,
**dadurch gekennzeichnet, dass** die Spanneinrichtung (20) mindestens ein bewegbares, insbesondere drehbares Exzenterelement (23, 27) aufweist.

10. Vorrichtung nach Anspruch 9,
**dadurch gekennzeichnet, dass** das Exzenterelement (23, 27) an einem im Wesentlichen zylindrischen Spannstift (22) ausgebildet ist, der drehbar an der Düsenanordnung gelagert ist.

11. Vorrichtung nach Anspruch 9 oder 10,
**dadurch gekennzeichnet, dass** die Zentrierbolzen (50, 52) Ausnehmungen (64, 68) aufweisen, die mit dem Exzenterelement (23, 27) zum Verspannen in Eingriff bringbar sind.

12. Vorrichtung nach einem der vorstehenden Ansprüche,
**dadurch gekennzeichnet, dass** die Düseneinheit
mehrere erste Einlässe (28) für mehrere erste Massenströme aus einem ersten Füllstromteiler (4) und
mehrere zweite Einlässe (30) für mehrere zweite Massenströme aus einem zweiten Füllstromteiler (6) aufweist und
die Düsen der Düsenanordnung als Koextrusionsdüsen ausgebildet sind, um mehrere Massen-Ströme aus dem ersten (4) bzw. zweiten (6) Füllstromteiler im Wesentlichen koaxial zu extrudieren.

13. Vorrichtung nach Anspruch 12,
**dadurch gekennzeichnet, dass** die zwei Füllstromteiler (4, 6) an gegenüberliegenden Seiten der Düsenanordnung an dieser befestigbar sind.

14. Vorrichtung nach einem der Ansprüche 12 oder 13,
**dadurch gekennzeichnet, dass** die Spanneinrichtung (20) die beiden Füllstromteiler (4, 6) gemeinsam mit der Düsenanordnung verspannt.

15. Vorrichtung nach Anspruch 14,
**dadurch gekennzeichnet, dass** die Spanneinrichtung (20) mindestens ein erstes Exzenterelement (23) zum Verspannen des ersten Füllstromteilers (4) und ein zweites Exzenterelement (27) zum Verspannen des zweiten Füllstromteiler (6) aufweist.

16. Vorrichtung nach einem der Ansprüche 7 bis 15,
**dadurch gekennzeichnet, dass** die Spannelnrichtung (20) dazu eingerichtet ist mindestens zwei Teile (2a, 2b, 2c) des madularen Düsenblocks (2) lösbar miteinander zu verspannen,

17. Vorrichtung nach Anspruch 16,
**dadurch gekennzeichnet, dass** der Spannstift (22) einen radial vorstehenden Vorsprung (25) aufweist, der mit einer schraubenlinienförmig ausgebildeten Nut (25a) an einem Teil des Düsenblocks (2) zusammenwirkt.

## Claims

1. Apparatus (1) for extruding flowable food masses, having
at least one filling flow divider (4, 6) which comprises an inlet (36, 38) for introducing the flowable mass and a plurality of outlets (24, 26) for delivering a plurality of mass flows of the flowable mass, and
a nozzle arrangement, having a plurality of nozzles, each comprising an inlet (28, 30), connectable to an outlet of the filling flow divider (4, 6), and an outlet (40) for extruding the flowable mass,
**characterised in that** the filling flow divider (4, 6) is mounted movably relative to the nozzle arrangement by means of a bearing device (8, 10),
the bearing device (8, 10) comprising at least one linear guide, and
the linear guide comprising one or more rails and/or pipes (12, 13, 16, 17) and one or more rollers (72a, 72b, 72c, 74a, 74b, 74c) guided on the rail and/or the pipe (12, 13, 16, 17).

2. Apparatus according to claim 1,
**characterised in that** the bearing device (8, 10) is adapted to guide the filling flow divider (4, 6) on a defined path.

3. Apparatus according to one of the preceding claims,
**characterised by** a nozzle block (2) which comprises the plurality of inlets (28, 30) of the nozzle arrangement.

4. Apparatus according to claim 3,
**characterised in that** the nozzle block (2) is modular with a plurality of parts, each part (2a, 2b, 2c) comprising at least one portion (76, 78, 79, 82) of each of the plurality of nozzles and the parts (2a, 2b, 2c) being releasably attachable to one another.

5. Apparatus according to claim 4,
**characterised in that** the portions (76, 78, 79, 82) of the nozzles are configured as flow channels in the modular parts (2a, 2b, 2c).

6. Apparatus according to one of the preceding claims,
**characterised in that** the filling flow divider (4, 6) is releasably attachable immediately adjacently to the nozzle arrangement, so that the outlets (24, 26) of the filling flow divider (4, 6) communicate with the inlets (28, 30) of the nozzle arrangement.

7. Apparatus according to claim 6,
**characterised in that** the filling flow divider (4, 6) is releasably attachable to the nozzle arrangement by means of a clamping device (20).

8. Apparatus according to claim 7,
**characterised in that** the filling flow divider (4, 6) comprises at least one centring pin (50, 52) for positioning the filling flow divider (4, 6) against the nozzle arrangement, and the nozzle arrangement comprises at least one corresponding centring recess (54, 56) and the clamping device (20) cooperates with the centring pin (50, 52) and the centring recess (54, 56) such that the filling flow divider (4, 6) is releasably attachable by means of the clamping device (20) to the nozzle arrangement in a positioned manner.

9. Apparatus according to claim 7 or 8,
**characterised in that** the clamping device (20) comprises at least one movable, in particular rotatable, eccentric element (23, 27).

10. Apparatus according to claim 9,
**characterised in that** the eccentric element (23, 27) is formed on a substantially cylindrical clamping pin (22) which is rotatably mounted on the nozzle arrangement.

11. Apparatus according to claim 9 or 10,
**characterised in that** the centring pins (50, 52) comprise recesses (64, 68) which are engageable with the eccentric element (23, 27) for clamping.

12. Apparatus according to one of the preceding claims, **characterised in that** the nozzle unit comprises
a plurality of first inlets (28) for a plurality of first mass flows from a first filling flow divider (4) and
a plurality of second inlets (30) for a plurality of second mass flows from a second filling flow divider (6) and
the nozzles of the nozzle arrangement are configured as coextrusion nozzles, in order to extrude a plurality of mass flows from the first (4) and second (6) filling flow divider substantially coaxially.

13. Apparatus according to claim 12,
**characterised in that** the two filling flow dividers (4, 6) are attachable to the nozzle arrangement on opposite sides of the latter.

14. Apparatus according to one of claims 12 or 13,
**characterised in that** the clamping device (20) clamps the two filling flow dividers (4, 6) jointly to the nozzle arrangement.

15. Apparatus according to claim 14,
**characterised in that** the clamping device (20) comprises at least one first eccentric element (23) for clamping the first filling flow divider (4)
and a second eccentric element (27) for clamping the second filling flow divider (6).

16. Apparatus according to one of claims 7 or 15,
**characterised in that** the clamping device (20) is adapted to clamp at least two parts (2a, 2b, 2c) of the modular nozzle block (2) releasably to one another.

17. Apparatus according to claim 16,
**characterised in that** the clamping pin (22) comprises a radially protruding projection (25) which cooperates with a helically formed groove (25a) on a part of the nozzle block (2).

## Revendications

1. Dispositif (1) destiné à extruder des masses coulantes d'aliments, comprenant
au moins un séparateur de flux de remplissage (4, 6), lequel comprend un orifice d'entrée (36, 38) permettant d'introduire la masse coulante et plusieurs orifices de sortie (24, 26) permettant de distribuer plusieurs flux de masse de la masse coulante, et
un ensemble de buses, comprenant plusieurs buses, lequel comporte respectivement un orifice d'entrée (28, 30) pouvant être relié à un orifice de sortie du séparateur de flux de remplissage (4, 6) et un orifice de sortie (40) permettant d'extruder la masse coulante,
**caractérisé en ce que** le séparateur de flux de remplissage (4, 6) est monté mobile par rapport à l'ensemble de buses au moyen d'un système de montage (8, 10),
le système de montage (8, 10) comprend au moins un guidage linéaire, et
le guidage linéaire comprend un ou plusieurs rails et/ou tubes (12, 13, 16, 17) et un ou plusieurs rouleaux (72a, 72b, 72c, 74a, 74b, 74c) guidés sur le rail et/ou le tube (12, 13, 16, 17).

2. Dispositif selon la revendication 1, **caractérisé en ce que** le système de montage (8, 10) est conçu pour guider le séparateur de flux de remplissage (4, 6) sur une bande définie.

3. Dispositif selon l'une quelconque des revendications précédentes,
**caractérisé par** un bloc de buses (2), qui comprend plusieurs orifices d'entrée (28, 30) de l'ensemble de buses.

4. Dispositif selon la revendication 3,
**caractérisé en ce que** le bloc de buses (2) comporte plusieurs parties modulaires, chaque partie (2a, 2b, 2c) comprenant au moins une section (76, 78, 79, 82) de chacune des différentes buses et les parties (2a, 2b, 2c) pouvant être fixées les unes sur les autres de manière détachable.

5. Dispositif selon la revendication 4,
**caractérisé en ce que** les sections (76, 78, 79, 82) des buses sont réalisées sous la forme de canaux d'écoulement dans les parties modulaires (2a, 2b, 2c).

6. Dispositif selon l'une quelconque des revendications précédentes,
**caractérisé en ce que** le séparateur de flux de remplissage (4, 6) peut être fixé détachable sur l'ensemble de buses de manière directement voisine, de sorte que les orifices de sortie (24, 26) du séparateur de flux de remplissage (4, 6) communiquent avec les orifices d'entrée (28, 30) de l'ensemble de buses.

7. Dispositif selon la revendication 6,
**caractérisé en ce que** le séparateur de flux de remplissage (4, 6) peut être fixé détachable sur l'ensemble de buses au moyen d'un dispositif de serrage (20).

8. Dispositif selon la revendication 7,
**caractérisé en ce que** le séparateur de flux de remplissage (4, 6) comprend au moins un boulon de centrage (50, 52) permettant de positionner le séparateur de flux de remplissage (4, 6) contre l'ensemble de buses, et l'ensemble de buses comprend au moins un évidement de centrage (54, 56) correspondant et le dispositif de serrage (20) coopère avec le boulon de centrage (50, 52) et l'évidement de centrage (54, 56), de sorte que le séparateur de flux de remplissage (4, 6) peut être fixé détachable en étant positionné avec l'ensemble de buses au moyen du dispositif de serrage (20).

9. Dispositif selon la revendication 7 ou 8,
**caractérisé en ce que** le dispositif de serrage (20) comprend au moins un élément excentrique (23, 27) mobile, en particulier rotatif.

10. Dispositif selon la revendication 9,
**caractérisé en ce que** l'élément excentrique (23, 27) est formé sur une goupille de serrage (22) sensiblement cylindrique, qui est montée rotative sur l'ensemble de buses.

11. Dispositif selon la revendication 9 ou 10,
**caractérisé en ce que** le boulon de centrage (50, 52) comprend des évidements (64, 68) qui peuvent être amenés en prise avec l'élément excentrique (23, 27) pour le serrage.

12. Dispositif selon l'une quelconque des revendications précédentes,
**caractérisé en ce que** l'unité de buses
comprend plusieurs premiers orifices d'entrée (28) pour plusieurs premiers flux de masse provenant d'un premier séparateur de flux de remplissage (4) et
plusieurs deuxièmes orifices d'entrée (30) pour plusieurs deuxièmes flux de masse provenant d'un deuxième séparateur de flux de remplissage (6) et
les buses de l'ensemble de buses sont réalisées sous la forme de buses de co-extrusion, afin d'extruder de manière sensiblement coaxiale plusieurs flux de masse provenant du premier (4) ou du deuxième (6) séparateur de flux de remplissage.

13. Dispositif selon la revendication 12,
**caractérisé en ce que** les deux séparateurs de flux de remplissage (4, 6) peuvent être fixés sur des faces opposées de l'ensemble de buses sur ce dernier.

14. Dispositif selon l'une quelconque des revendications 12 et 13,
**caractérisé en ce que** le dispositif de serrage (20) serre les deux séparateurs de flux de remplissage (4, 6) conjointement avec l'ensemble de buses.

15. Dispositif selon la revendication 14,
**caractérisé en ce que** le dispositif de serrage (20) comprend au moins un premier élément excentrique (23) permettant de serrer le premier séparateur de flux de remplissage (4)
et un deuxième élément excentrique (27) permettant de serrer le deuxième séparateur de flux de remplissage (6).

16. Dispositif selon l'une quelconque des revendications 7 à 15,
**caractérisé en ce que** le dispositif de serrage (20) est conçu pour serrer au moins deux parties (2a, 2b, 2c) du bloc de buses (2) modulaire de manière détachable l'un avec l'autre.

17. Dispositif selon la revendication 16,
**caractérisé en ce que** la goupille de serrage (22) comprend une partie saillante (25) faisant saillie radialement, qui coopère avec une rainure (25a) en forme d'hélice sur une partie du bloc de buses (2).
